# EUROPEAN PATENT APPLICATION

(11) **EP 3 322 112 A1**
(43) Date of publication of application: **16.05.2018**
(21) Application number: 16821244.7
(22) Date of filing: 23.06.2016
(51) Int. Cl.: H04J 11/00, H04J 1/00, H04J 4/00

(54) **TRANSMITTING DEVICE, RECEIVING DEVICE, WIRELESS COMMUNICATION SYSTEM, WIRELESS COMMUNICATION METHOD, AND COMPUTER PROGRAM**

(30) Priority: 09.07.2015 JP 2015137687
(71) Applicant: KDDI Corporation, Tokyo 163-8003 (JP)
(72) Inventor: ZHAO Bingxuan, Fujimino-shi Saitama 356-8502 (JP); YUNOKI Katsuo, Fujimino-shi Saitama 356-8502 (JP)
(74) Representative: Wallinger, Michael
(86) International application number: PCT/JP2016/068685
(87) International publication number: WO 2017/006774

(57) **Abstract**

A transmitting device includes a data transmitting unit configured to wirelessly transmit a frame including a payload part in which data destined for a plurality of receiving devices is frequency-division multiplexed and a header including a signal field part storing division information about frequency division of the payload part.

## Description

### TECHNICAL FIELD

The present invention relates to technology of a wireless communication system.

Priority is claimed on Japanese Patent Application No. 2015-137687, filed July 9, 2015, the content of which is incorporated herein by reference.

### BACKGROUND ART

Advances in technology in which a user terminal typified by a mobile phone terminal performs data communication during movement (technology of mobile wireless data communication) are remarkable and technological innovation of various wireless communication schemes has been made and put to practical use. In recent years, communication standards accelerating fourth generation data communication such as a Long Term Evolution (LTE) scheme or a Worldwide Interoperability for Microwave Access (WiMAX) scheme using orthogonal frequency division multiple access (OFDMA) technology have become mainstream. In OFDMA, access of a plurality of terminal devices is enabled by orthogonal frequency division multiplexing (OFDM).

On the other hand, a communication scheme of a wireless local area network (LAN) in which a personal computer (PC) or the like is mainly mounted has been developed on the basis of a communication procedure with a base station device using a carrier sense multiple access with collision avoidance (CSMA/CA) scheme. The IEEE 802.11 working group who is establishing the standard of the communication scheme of the wireless LAN has begun to consider the application of technology of OFDMA to a wireless LAN communication scheme based on the current CSMA/CA to more efficiently implement data communication.

In the conventional technology of Patent Literature 1, with respect to a transmission method prescribed in the IEEE 802.11ac wireless LAN communication standard, a preamble of a frame includes a first signal field (VHT-SIG-A) and a second signal field (VHT-SIG-B). Also, in a multiuser (MU) mode, simultaneous data communication destined for a plurality of devices is implemented by performing space division multiplexing using a dedicated space-time stream for each of a plurality of destination devices.

### CITATION LIST

### [Patent Literature]

[Patent Literature 1]
Japanese Patent No. 5607249

### SUMMARY OF INVENTION

### [Technical Problem]

However, in the conventional technology of Patent Literature 1, it is possible to include only data destined for one device per space-time stream. Thus, it is possible to perform multiplexed transmission only for a maximum number of devices capable of simultaneously using a space-time stream (four devices at maximum in the IEEE 802.11ac scheme).

Generally, in a wireless LAN, a collision probability of a radio frame is reduced by inspecting an unused state of a radio channel before a radio frame is transmitted and additionally providing a random waiting time to shift a transmission timing. The radio channel inspection procedure and the transmission waiting procedure performed prior to the transmission of the radio frame become overheads that degrade the performance of communication. Particularly, because an influence of the overheads increases when the number of devices using the same radio channel increases, it is desirable to improve the communication efficiency by reducing the overheads.

The present invention has been made in view of such circumstances, and an objective of the present invention is to provide a transmitting device, a receiving device, a wireless communication system, a wireless communication method, and a computer program capable of improving the utilization efficiency of a radio frame.

### [Solution to Problem]

(1) An aspect of the present invention is a transmitting device including: a data transmitting unit configured to wirelessly transmit a frame including a payload part in which data destined for a plurality of receiving devices is frequency-division multiplexed and a header including a signal field part storing division information about frequency division of the payload part.
(2) An aspect of the present invention is a transmitting device including: a data transmitting unit configured to wirelessly transmit a frame including a payload part in which data destined for a plurality of receiving devices is frequency-division multiplexed and a header including a first signal field part and a second signal field part subsequent to the first signal field part, wherein the second signal field part includes a plurality of division parts into which a frequency is divided in the same bandwidth as that of the payload part, and wherein the first signal field part stores division information about frequency division of the second signal field part and the payload part.
(3) In the transmitting device of the above-described (2), an aspect of the present invention is the transmitting device in which the payload part has data destined for a plurality of receiving devices further time-division multiplexed in a band corresponding to at least one division part of the second signal field part and the at least one division part of the second signal field part stores division information about time division of a payload part corresponding to the at least one division part.
(4) An aspect of the present invention is a transmitting device including: a data transmitting unit configured to wirelessly transmit a frame including a payload part in which data destined for a plurality of receiving devices is frequency-division multiplexed and a header including a first signal field part and a second signal field part subsequent to the first signal field part, wherein the second signal field part includes a plurality of division parts into which a frequency is divided, wherein the first signal field part stores division information about frequency division of the second signal field part, wherein the payload part has data destined for a plurality of receiving devices frequency-division multiplexed in a band corresponding to at least one division part of the second signal field part, and wherein the at least one division part of the second signal field part stores division information about frequency division of a payload part corresponding to the at least one division part.
(5) An aspect of the present invention is a transmitting device including: a data transmitting unit configured to wirelessly transmit a frame including a payload part in which data destined for a plurality of receiving devices is frequency-division multiplexed and a header including a first signal field part and a second signal field part subsequent to the first signal field part, wherein the second signal field part includes a plurality of division parts into which a frequency is divided, wherein the first signal field part stores division information about frequency division of the second signal field part, wherein the payload part has data destined for a plurality of receiving devices multiplexed in a combination of frequency division multiplexing and time division multiplexing in a band corresponding to at least one division part of the second signal field part, and wherein the at least one division part of the second signal field part stores division information about frequency division and time division of a payload part corresponding to the at least one division part.
(6) In the transmitting device according to any one of the above-described (2) to (5), an aspect of the present invention is the transmitting device in which the data transmitting unit wirelessly transmits the first signal field part within the frame in all directions and wirelessly transmits a plurality of space-time streams including at least the second signal field part and the payload part in each direction and the first signal field part stores division information of the second signal field part for each space-time stream.
(7) In the transmitting device according to any one of the above-described (2) to (6), an aspect of the present invention is the transmitting device in which the first signal field part includes a destination device identifier indicating a receiving device of a destination of data stored in a division part for each division part of the payload part.
(8) An aspect of the present invention is a receiving device including: a data receiving unit configured to receive the frame wirelessly transmitted from the transmitting device according to any one of the above-described (1) to (6); a header analyzing unit configured to analyze the header of the frame received by the data receiving unit; and a payload demapping unit configured to acquire data from the payload part of the frame received by the data receiving unit on the basis of a result of analyzing the header in the header analyzing unit.
(9) An aspect of the present invention is a receiving device including: a data receiving unit configured to receive the frame wirelessly transmitted from the transmitting device according to the above-described (7); a header analyzing unit configured to analyze the header of the frame received by the data receiving unit; and a payload demapping unit configured to acquire data from only a division part including data destined for the receiving device among division parts of the payload part of the frame received by the data receiving unit on the basis of a result of analyzing the header in the header analyzing unit.
(10) An aspect of the present invention is a wireless communication system including: a base station device including the transmitting device according to any one of the above-described (1) to (6); and a terminal device including the receiving device according to the above-described (8).
(11) An aspect of the present invention is a wireless communication system including: a base station device including the transmitting device according to the above-described (7); and a terminal device including the receiving device according to the above-described (9).
(12) An aspect of the present invention is a wireless communication method including a step of: wirelessly transmitting, by a transmitting device, a frame including a payload part in which data destined for a plurality of receiving devices is frequency-division multiplexed and a header including a signal field part storing division information about frequency division of the payload part.
(13) An aspect of the present invention is a computer program for causing a computer of a transmitting device to execute a step of: wirelessly transmitting a frame including a payload part in which data destined for a plurality of receiving devices is frequency-division multiplexed and a header including a signal field part storing division information about frequency division of the payload part.

### [Advantageous Effects of Invention]

According to the present invention, it is possible to improve utilization efficiency of a radio frame.

### BRIEF DESCRIPTION OF DRAWINGS

Fig. 1 is a configuration diagram showing a wireless LAN system 1 according to an embodiment of the present invention.
Fig. 2 is a configuration diagram showing a transmitting device and a receiving device according to an embodiment of the present invention.
Fig. 3 is a diagram showing a configuration example 1 of a radio frame according to an embodiment of the present invention.
Fig. 4 is a diagram showing an example of frequency division of a second signal field part and a payload part according to an embodiment of the present invention.
Fig. 5 is a diagram showing a configuration example 2 of a radio frame according to an embodiment of the present invention.
Fig. 6 is a diagram showing a configuration example 3 of a radio frame according to an embodiment of the present invention.
Fig. 7 is a diagram showing a configuration example 4 of a radio frame according to an embodiment of the present invention.
Fig. 8 is a diagram showing a configuration example 5 of a radio frame according to an embodiment of the present invention.
Fig. 9 is a diagram showing an example of a configuration of a conventional radio frame and an example of a time length.
Fig. 10 is a diagram showing an example of a time length of a configuration example 1 of a radio frame according to an embodiment of the present invention.

### DESCRIPTION OF EMBODIMENTS

Hereinafter, embodiments of the present invention will be described with reference to the drawings.

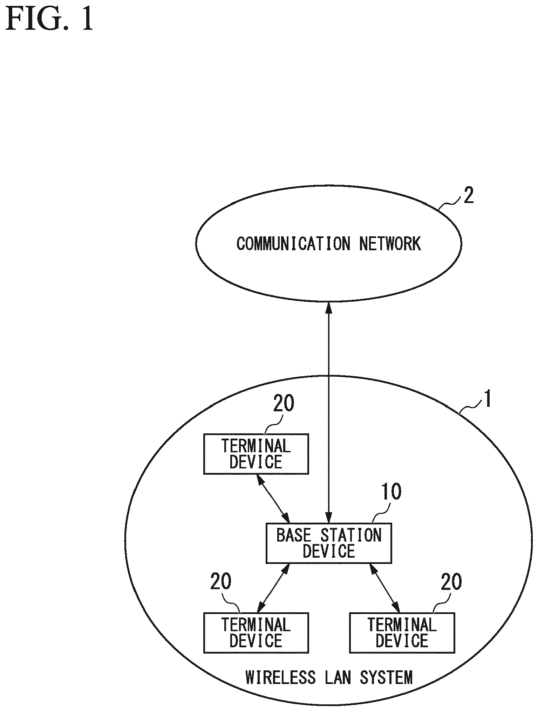

Fig. 1 is a configuration diagram showing a wireless LAN system 1 according to an embodiment of the present invention. The wireless LAN system 1 shown in Fig. 1 includes one base station device 10 and a plurality of terminal devices 20. The wireless LAN system 1 uses an OFDMA scheme. The base station device 10 functions as an access point (AP) of a wireless LAN. The terminal device 20 in a wireless LAN area of the base station device 10 can connect to another communication network 2 such as the Internet, or communicate with another communication device 20 in the same wireless LAN area via the base station device 10.

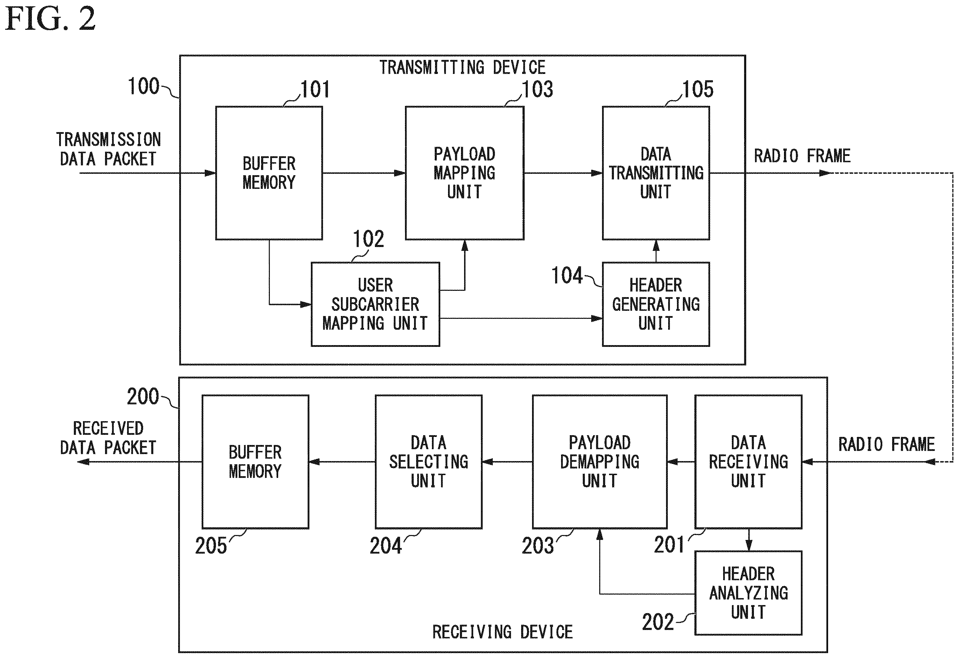

Fig. 2 is a configuration diagram showing a transmitting device 100 and a receiving device 200 according to an embodiment of the present invention. The transmitting device 100 and the receiving device 200 use the OFDM scheme. The base station device 10 shown in Fig. 1 includes the transmitting device 100 shown in Fig. 2. The terminal device 20 shown in Fig. 1 includes the receiving device 200 shown in Fig. 2. In the wireless LAN system 1, the transmitting device 100 of the base station device 10 and the receiving device 200 of the terminal device 20 perform wireless communication in a downlink direction (a direction from the base station device 10 to the terminal device 20). Also, the base station device 10 includes a receiving device that performs wireless communication in an uplink direction (the direction from the terminal device 20 to the base station device 10). Also, the terminal device 20 includes a transmitting device that performs wireless communication in the uplink direction.

The transmitting device 100 shown in Fig. 2 includes a butter memory 101, a user subcarrier mapping unit 102, a payload mapping unit 103, a header generating unit 104, and a data transmitting unit 105. The buffer memory 101 temporarily stores a transmission data packet which is a data packet to be transmitted from its own transmitting device 100. The transmission data packet is stored in the buffer memory 101 in the format of a media access control (MAC) frame.

The user subcarrier mapping unit 102 allocates subcarriers and the like in the payload part of the radio frame with respect to each receiving device 200. The user subcarrier mapping unit 102 makes a plan of mapping of data to be stored in the payload part in consideration of a modulation method when a plurality of transmission data packets having the MAC frame format within the buffer memory 101 are transmitted to each receiving device 200.

The payload mapping unit 103 receives a transmission data packet from the buffer memory 101. The payload mapping unit 103 modulates the transmission data packet received from the buffer memory 141 in accordance with the mapping plan by the user subcarrier mapping unit 102 and maps modulated data to frequency resources and time resources of the payload part.

The header generating unit 104 generates a header of the radio frame on the basis of the mapping plan by the user subcarrier mapping unit 102. The data transmitting unit 105 generates a radio frame by using the header generated by the header generating unit 104 and the payload part generated by the payload mapping unit 103, converts the generated radio frame into a signal in a radio frequency band, and wirelessly transmits the signal. The radio frame wirelessly transmitted from the transmitting device 100 is received by the receiving device 200.

The receiving device 200 shown in Fig. 2 includes a data receiving unit 201, a header analyzing unit 202, a payload demapping unit 203, a data selecting unit 204, and a buffer memory 205. The data receiving unit 201 receives a radio frame wirelessly transmitted from the transmitting device 100. The data receiving unit 201 converts the received radio frame of a radio frequency band into a signal of a baseband frequency.

The header analyzing unit 202 performs header analysis on the radio frame converted into the signal of the baseband frequency by the data receiving unit 201. The header analyzing unit 202 outputs a header analysis result to the payload demapping unit 203.

The payload demapping unit 203 performs demapping and demodulation of the payload part of the radio frame converted into the baseband frequency signal by the data receiving unit 201 on the basis of the header analysis result from the header analyzing unit 202. The data selecting unit 204 selects only a MAC frame destined for its own receiving device 200 from a result of demapping and demodulating the payload part in the payload demapping unit 203 and discards MAC frames other than the MAC frame destined for its own receiving device 200.

The buffer memory 205 temporarily stores the MAC frame destined for its own receiving device 200 selected by the data selecting unit 204. The MAC frame stored in the buffer memory 205 is output from the buffer memory 205 in a data format of the received data packet. The received data packet may be output to another functional unit within the terminal device 20 equipped with the receiving device 200 or may be output to a device other than the terminal device 20 provided with the receiving device 200.

Also, the transmission data packet and the received data packet are, for example, Internet protocol (IP) packets.

Next, an example of a configuration of a radio frame according to the present embodiment will be described.

### (Configuration example 1 of radio frame)

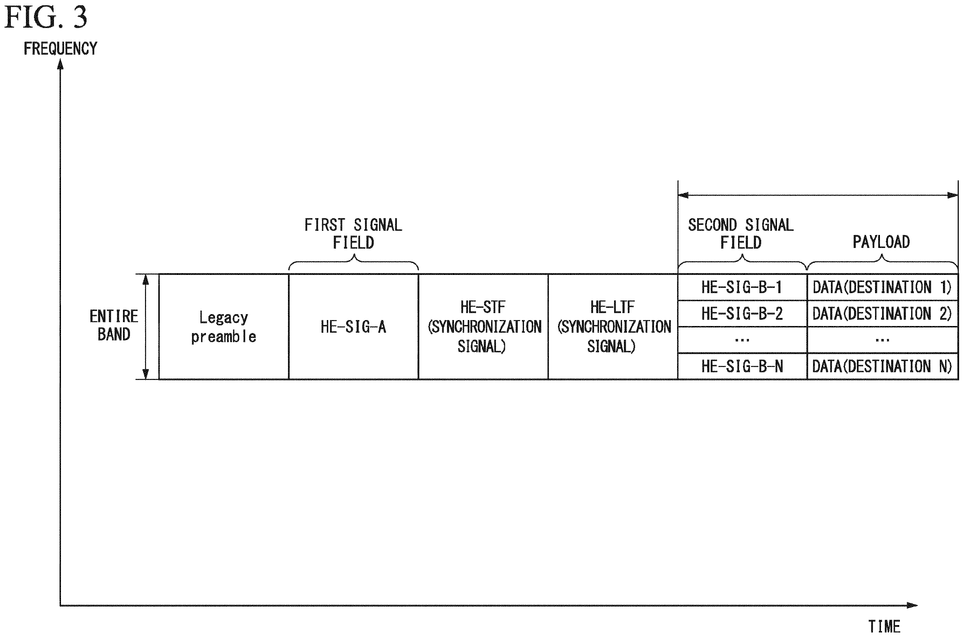

Fig. 3 is a diagram showing the configuration example 1 of the radio frame according to the present embodiment. In the configuration example 1 of the radio frame shown in Fig. 3, the data destined for the plurality of receiving devices 200 is frequency-division multiplexed in the payload part. In the present embodiment, the OFDM scheme is used for frequency division multiplexing of data in the payload part.

The radio frame shown in Fig. 3 includes a legacy preamble part, a first signal field part (HE-SIG-A), an HE-STF part, an HE-LTF part, a second signal field part (HE-SIG-B-1, ..., N), and a payload part. The legacy preamble part includes a signal having a known signal pattern defined in a communication standard of a conventional wireless LAN. The legacy preamble part has a function of maintaining backward compatibility. Using the legacy preamble part, the wireless communication device corresponding only to the conventional wireless LAN communication standard can detect the radio frame shown in Fig. 3. The HE-STF part and the HE-LTF part store a synchronization signal. The synchronization signal of the HE-STF part and the HE-LTF part includes a known signal pattern for executing a synchronization process on the radio frame shown in Fig. 3.

The second signal field part and the payload part are frequency-divided with the same bandwidth. In the present embodiment, the OFDM scheme is used for frequency division multiplexing of data in the second signal field part and the payload part. For example, if the entire radio frame has a bandwidth of 80 MHz, 80 MHz of the entire band of the radio frame is divided into four small bands each having 20 MHz. In this case, the number of divisions is "N=4," and the second signal field part is frequency-divided into four division parts HE-SIG-B-1, 2, 3, and 4. Also, the payload part is frequency-divided into four division parts of a "data part of destination 1," a "data part of destination 2," a "data part of destination 3," and a "data part of destination 4" corresponding to four division parts HE-SIG-B-1, 2, 3, and 4 of the second signal field part. Data destined for a plurality of receiving devices 200 is stored in each small band which is a division part of a payload part.

Each division part of the second signal field part stores information such as a modulation method of the division part of the corresponding payload part. For example, if the above-described number of divisions is "N=4," the division part HE-SIG-B-1 in the second signal field part stores information such as the modulation method of the division part "data part of destination 1" of the payload part, the division part HE-SIG-B-2 stores information such as the modulation method of the division part "data part of destination 2" of the payload part, the division part HE-SIG-B-3 stores information such as the modulation method of the division part "data part of destination 3" of the payload part, and the division part HE-SIG-B-4 stores information such as the modulation method of the division part "data part of destination 4" of the payload part.

Also, the second signal field part may store a data length of data to be transmitted to each receiving device 200.

The first signal field part stores bandwidth information indicating a bandwidth of the entire radio frame shown in Fig. 3 and division information about frequency division of the second signal field part. The division information includes number-of-divisions information indicating the number of divisions N of the second signal field part and division range information indicating a frequency band of each division part of the second signal field part. The division range information indicates a start position and an end position or a division width of a frequency band of each division part. In the present configuration example 1, because the second signal field part and the payload part are frequency-divided with the same bandwidth, the division information of the first signal field part is information about the frequency division of the second signal field part and the payload part.

Also, if the second signal field part is divided in a fixed form, an identifier indicating each division part of the fixed form may be predetermined and the identifier may be used as the division range information. For example, if the entire bandwidth of the radio frame is divided in units of 20 MHz, a number indicating an order corresponding to each division part such as a first 20 MHz division part, a second 20 MHz division part, and a third 20 MHz division part may be designated as the division range information.

Also, the arrangement of the first signal field part is not limited to the configuration example of Fig. 3. The first signal field part is arranged at a position previous to at least the second signal field part. For example, the first signal field part may be arranged between the HE-LTF part and the second signal field part.

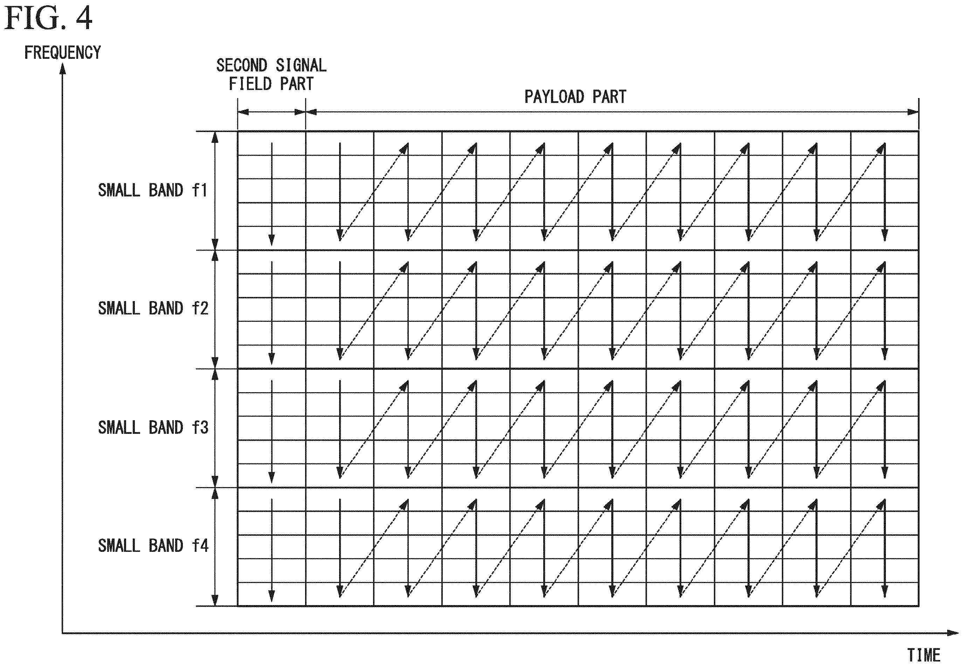

Fig. 4 is a diagram showing an example of frequency division of the second signal field part and the payload part of the present embodiment. In the example of Fig. 4, the entire band of the radio frame is constituted of 20 subcarriers. The entire band of the radio frame constituted of the 20 subcarriers is equally divided into four small bands f1, f2, f3, and f4. Each of the small bands f1, f2, f3, and f4 has five subcarriers. The second signal field part of each of the small bands f1, f2, f3, and f4 stores information such as the modulation method of the division part of the payload part continuous thereto.

In Fig. 4, examples of data reading directions in the second signal field part and the payload part are indicated by solid-line arrows and broken-line arrows. In the example of Fig. 4, the data reading direction is the same in the small bands f1, f2, f3, and f4. For example, in the small band f1, the modulation method of the payload part of the small band f1 can be identified by sequentially reading the data from the five subcarriers of the second signal field part. The modulation method is a coding rate and a modulation level of the OFDM symbol defined in the wireless communication scheme used in the wireless LAN system 1. Information indicating the modulation method may be an identifier that is predetermined for each modulation method.

In the payload part of each of the small bands f1, f2, f3, and f4, modulated data in which data destined for each receiving device 200 is modulated in the modulation method indicated by the second signal field part is stored. The method of storing the modulated data in the payload part is defined in the wireless communication scheme used in the wireless LAN system 1. The direction of reading data within the payload part indicated by the arrows in Fig. 4 is an example and is not limited thereto.

The header generating unit 104 of the transmitting device 100 generates a legacy preamble part, a first signal field part, an HE-STF part, an HE-LTF part, and a second signal field part to be included in the header of the radio frame. The header analyzing unit 202 of the receiving device 200 analyzes the legacy preamble part, the first signal field part, the HE-STF part, the HE-LTF part and the second signal field part included in the header of the radio frame.

The above is the description of the configuration example 1 of the radio frame.

Here, a modified example of the configuration example 1 of the above-described radio frame will be described. In the configuration example 1 of the above-described radio frame, the first signal field part stores bandwidth information indicating a bandwidth of the entire radio frame and division information about frequency division of the second signal field part. The division information includes number-of-divisions information indicating the number of divisions N of the second signal field part and division range information indicating a frequency band of each division part of the second signal field part. In the present modified example, a destination device identifier indicating a destination device of data to be stored in the division part is further included for each division part of the payload part with respect to the division information. The destination device identifier may be included in combination with the division range information. Thereby, the processing load of the receiving device 200 can be reduced. This point will be described below.

A conventional wireless LAN receiving device identifies a receiver address included in a MAC frame obtained by demodulating a payload part included in a radio frame to determine whether or not the radio frame is destined for its own device. According to this conventional radio frame determination method, in the case of the above-described radio frame shown in Fig. 4, it is possible to determine whether or not a radio frame is destined for its own device only when the receiver address included in each MAC frame is identified by demodulating the payload parts of all the small bands f1, f2, f3, and f4 in correspondence with each modulation method and acquiring MAC frames from the payload parts of the small bands f1, f2, f3, and f4. In this conventional radio frame determination method, the demodulation process corresponding to the modulation method of each payload part is performed for each of the small bands f1, f2, f3, and f4, so that the processing load of the receiving device increases.

On the other hand, according to the present modified example, by further including the destination device identifier in the division information stored in the first signal field part, the header analyzing unit 202 of the receiving device 200 can determine whether or not the radio frame includes data destined for its own receiving device 200 and further determine a payload part of a small band of the radio frame including data destined for its own receiving device 200 from a result of analyzing the first signal field part of the radio frame. Thereby, it is possible to reduce a processing load of the receiving device 200 because it is only necessary for the payload demapping unit 203 of the receiving device 200 to demodulate only a payload part of a small band including data destined for its own receiving device 200 among small bands of the radio frame.

Also, a MAC address of the receiving device 200 or a connection number (an association ID) of the wireless LAN system 1 may be used as the destination device identifier stored in the first signal field part. However, from a viewpoint of security, it is preferable to set a value obtained by converting the MAC address or the connection number according to an information compression process or the like or combining the MAC address or the connection number with other information as a destination device identifier instead of using the MAC address of the receiving device 200 or the connection number of the wireless LAN system 1 as a destination device identifier as it is. This is because the header is not generally encrypted and it is not preferable to store the MAC address or the connection number which is one piece of detailed information of the receiving device 200 in an unencrypted header as it is from the viewpoint of security.

Thus, for example, a value obtained by shortening the MAC address or the connection number may be designated as the destination device identifier. For example, a predetermined number of less significant bits of the MAC address or the connection number may be designated as the destination device identifier. Alternatively, the destination device identifier may be a combination of a multiaccess (MA) group identifier indicating a group to which the receiving device 200 belongs with respect to multiaccess of the wireless LAN system 1 and the value obtained by shortening the MAC address or the connection number. In this manner, preferably, it is impossible to uniquely identify the receiving device 200 only by analyzing the header of the radio frame.

Also, as the MA group identifier, an identifier of a group of the receiving device 200 of the destination of the data to be multiplexed by OFDMA may be used. Also, for example, a plurality of receiving devices 200 for which it is preferable to perform multiplexing by OFDMA may be grouped into the same identifier group.

### (Configuration example 2 of radio frame)

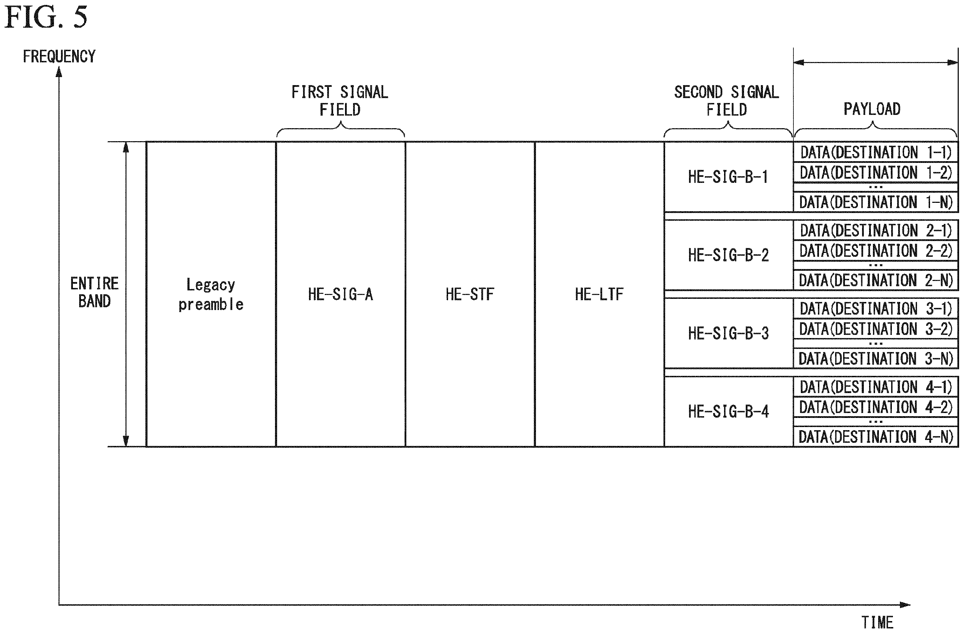

Fig. 5 is a diagram showing the configuration example 2 of the radio frame according to the present embodiment. In the configuration example 2 of the radio frame shown in Fig. 5, as in the above-described configuration example 1 of the radio frame shown in Fig. 3, the data destined for the plurality of receiving devices 200 is frequency-division multiplexed in the payload part. However, in the present configuration example 2, the data destined for the plurality of receiving devices 200 is further frequency-division multiplexed in the payload part of one small band. In the present embodiment, an OFDM scheme is used for frequency division multiplexing of data in the payload part.

In the example of Fig. 5, the entire band of the radio frame is divided into four small bands. Thereby, the second signal field part is frequency-divided into four division parts HE-SIG-B-1, 2, 3, and 4 corresponding to the four small bands. Also, the payload part is further frequency-divided into N minimum bands in the small band corresponding to each of the four division parts HE-S1G-B-1, 2, 3, and 4 of the second signal field part. The payload part corresponding to the division part HE-SIG-B-1 of the second signal field part is frequency-divided into N minimum band parts "data part of destination 1-1," "data part of destination 1-2," ..., "data part of destination 1-N." Also, in the payload parts corresponding to the division parts HE-SIG-B-2 to 4 of the second signal field part, as in the payload part corresponding to the division part HE-SIG-B-1 of the second signal field part, the payload part is frequency-divided into N minimum band parts. In each of the minimum band parts in the payload part, data destined for the plurality of receiving devices 200 is stored.

According to the example of Fig. 5, because data destined for N receiving devices 200 per small band can be frequency-division multiplexed, it is possible to frequency-division multiplex data destined for "4×N" receiving devices 200 per radio frame.

Also, in the configuration example 2 of the radio frame shown in Fig. 5, the configuration of the header of the radio frame is similar to that of the configuration example 1 of the radio frame shown in Fig. 3 described above. However, each division part of the second signal field part stores minimum band division information about frequency division into minimum bands of the payload part corresponding to its own division part and information such as modulation method of each minimum band. The minimum band division information includes number-of-minimum-band-divisions information indicating the number of divisions N for minimum bands and minimum band division range information indicating each minimum band of the payload part. The minimum band division range information indicates a start position and an end position or a division width of each minimum band. Also, if the division into the minimum bands is performed in a fixed form, an identifier indicating each minimum band of the fixed form may be predetermined and the identifier may be used as the minimum band division range information.

The header generating unit 104 of the transmitting device 100 generates a legacy preamble part, a first signal field part, an HE-STF part, an HE-LTF part, and a second signal field part to be included in the header of the radio frame. The header analyzing unit 202 of the receiving device 200 analyzes the legacy preamble part, the first signal field part, the HE-STF part, the HE-LTF part and the second signal field part included in the header of the radio frame.

The above is the description of the configuration example 2 of the radio frame.

### (Configuration example 3 of radio frame)

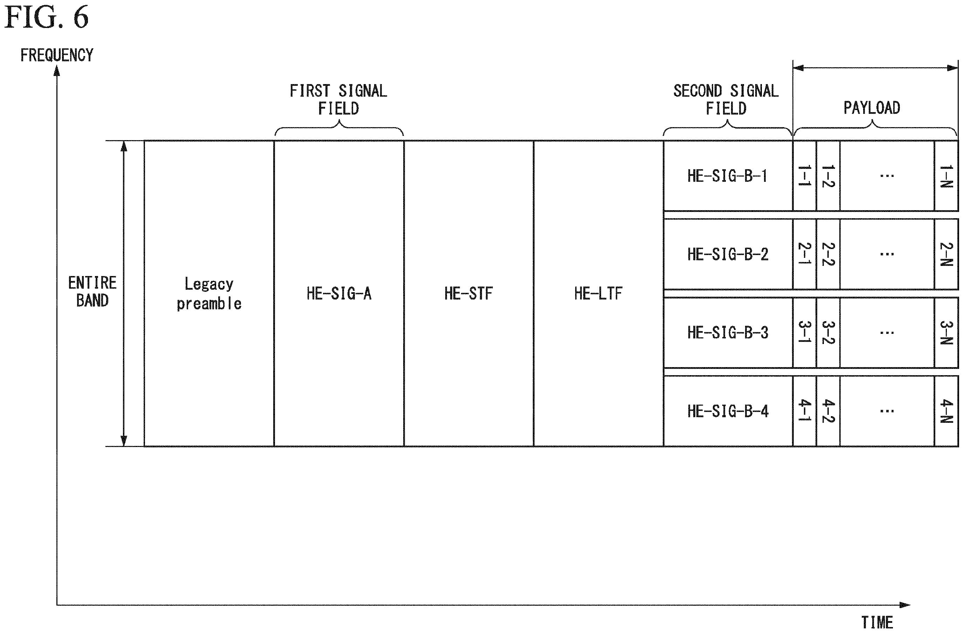

Fig. 6 is a diagram showing the configuration example 3 of the radio frame according to the present embodiment. In the configuration example 2 of the radio frame shown in Fig. 6, as in the above-described configuration example 1 of the radio frame shown in Fig. 3, the data destined for the plurality of receiving devices 200 is frequency-division multiplexed in the payload part. However, in the present configuration example 3, the data destined for the plurality of receiving devices 200 is further time-division multiplexed in the payload part of one small band. In the present embodiment, an OFDM scheme is used for frequency division multiplexing of data in the payload part.

In the example of Fig. 6, the entire band of the radio frame is divided into four small bands. Thereby, the second signal field part is frequency-divided into four division parts HE-SIG-B-1, 2, 3, and 4 corresponding to the four small bands. Also, the payload part is further time-divided into N time slots in the small band corresponding to each of the four division parts HE-SIG-B-1, 2, 3, 4 of the second signal field part. The payload part corresponding to the division part HE-SIG-B-1 of the second signal field part is time-divided into N time slots "data part of destination 1-1," "data part of destination 1-2," and "data part of destination 1-N." Also, in the payload part corresponding to each of the division parts HE-SIG-B-2 to 4 of the second signal field part, as in the payload part corresponding to the division part HE-SIG-B-1 of the second signal field part, the payload part is time-divided into N time slots. In each time slot of the payload part, data destined for the plurality of receiving devices 200 is stored.

According to the example of Fig. 6, because data destined for N receiving devices 200 can be time-division multiplexed per small band, it is possible to multiplex data destined for "4×N" receiving devices 200 per radio frame according to a combination of frequency division multiplexing and time division multiplexing.

Also, in the configuration example 3 of the radio frame shown in Fig. 6, the configuration of the header of the radio frame is similar to that of the configuration example 1 of the radio frame shown in Fig. 3 described above. However, each division part of the second signal field part stores time division information about time division for time slots of the payload part corresponding to its own division part and information such as the modulation method of each time slot. The time division information includes number-of-time-divisions information indicating the number of divisions N for time slots and time division range information indicating each time slot of the payload part. The time division range information indicates a start position and an end position or a time width of each time slot. If the division into time slots is performer in a fixed form, an identifier indicating each time slot in the fixed form may be predetermined and the identifier may be time division range information.

The header generating unit 104 of the transmitting device 100 generates a legacy preamble part, a first signal field part, an HE-STF part, an HE-LTF part, and a second signal field part to be included in the header of the radio frame. The header analyzing unit 202 of the receiving device 200 analyzes the legacy preamble part, the first signal field part, the HE-STF part, the HE-LTF part and the second signal field part included in the header of the radio frame.

The above is the description of the configuration example 3 of the radio frame.

### (Configuration example 4 of radio frame)

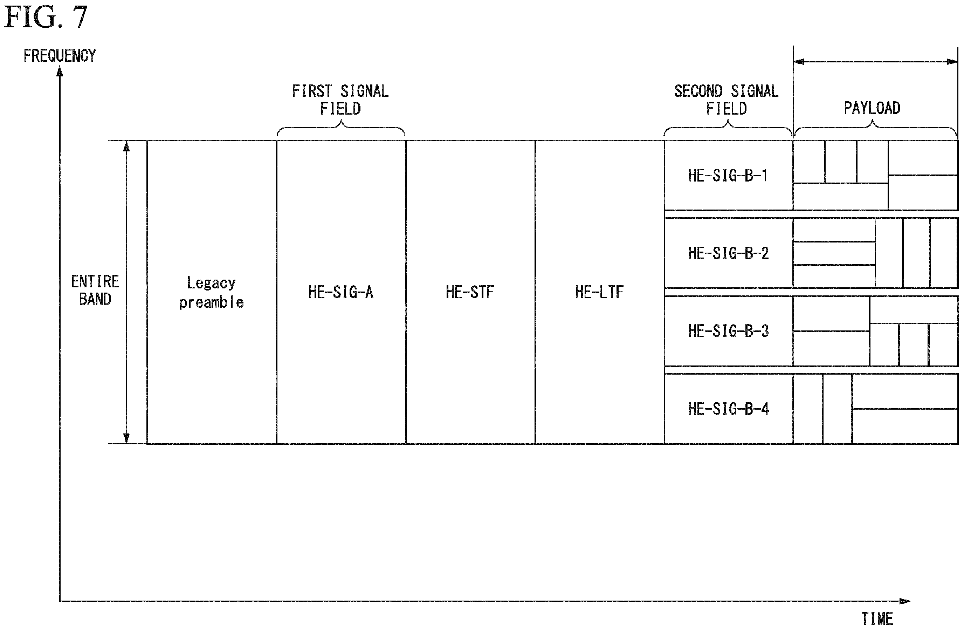

Fig. 7 is a diagram showing the configuration example 4 of the radio frame according to the present embodiment. In the configuration example 4 of the radio frame shown in Fig. 7, as in the above-described configuration example 1 of the radio frame shown in Fig. 3, the data destined for the plurality of receiving devices 200 is frequency-division multiplexed in the payload part. However, in this configuration example 4, data for a plurality of receiving devices 200 is further multiplexed in a combination of frequency division multiplexing and time division multiplexing in the payload part of one small band. In the present embodiment, the OFDM scheme is used for frequency division multiplexing of data in the payload part.

In the example of Fig. 7, the entire band of the radio frame is divided into four small bands. Thereby, the second signal field part is frequency-divided into four division parts HE-SIG-B-1, 2, 3, and 4 corresponding to the four small bands. Also, the payload part is further frequency-divided and time-divided into a plurality of division parts in the small band corresponding to each of the four division parts HE-SIG-B-1, 2, 3, and 4 of the second signal field part. The payload part corresponding to the division part HE-SIG-B-1 of the second signal field part is divided into a plurality of division parts by frequency division and time division and data destined for the plurality of receiving devices 200 is stored in the plurality of division parts. Also, in the payload parts corresponding to the division parts HE-SIG-B-2 to 4 of the second signal field part, as in the payload part corresponding to the division part HE-SIG-B-1 of the second signal field part, the payload part is divided into a plurality of division parts by frequency division and time division and data destined for the plurality of receiving devices 200 is stored in the plurality of division parts.

Also, in the configuration example 4 of the radio frame shown in Fig. 7, the configuration of the header of the radio frame is similar to the configuration example 1 of the radio frame shown in Fig. 3 described above. However, each division part of the second signal field part stores frequency/time division information about frequency division and time division into division parts of the payload part corresponding to its own division part and information such as the modulation method of each division part. The frequency/time division information includes number-of-frequency/time-divisions information indicating the number of divisions N for division parts and frequency/time division range information indicating each division part of the payload part. The frequency/time division range information indicates a start position and an end position of each of the frequency direction and the time method of each division part. When the division into division parts is performed in a fixed form, an identifier indicating each division part of the fixed form may be predetermined and the identifier may be used as the frequency/time division range information.

The header generating unit 104 of the transmitting device 100 generates a legacy preamble part, a first signal field part, an HE-STF part, an HE-LTF part, and a second signal field part to be included in the header of the radio frame. The header analyzing unit 202 of the receiving device 200 analyzes the legacy preamble part, the first signal field part, the HE-STF part, the HE-LTF part and the second signal field part included in the header of the radio frame.

The above is the description of the configuration example 4 of the radio frame.

Also, in one radio frame, any one of the above-described configuration examples 1 to 4 of the radio frame may be used alone, or any two or more thereof may be combined. For example, the payload part may be configured differently in each of the small bands f1, f2, f3, and f4 shown in Fig. 4. For example, in the small band f1, only the data destined for one receiving device 200 may be stored in the payload part by using the configuration example 1 of the radio frame shown in Fig. 3. In the small band f2, data destined for the N receiving devices 200 may be stored in the payload part according to frequency division multiplexing by using the configuration example 2 of the radio frame shown in Fig. 5. In the small band f3, data destined for the N receiving devices 200 may be stored in the payload part according to time division multiplexing by using the configuration example 3 of the radio frame shown in Fig. 6. In the small band f4, data destined for a plurality of receiving devices 200 may be stored in the payload part according to frequency division multiplexing and time division multiplexing by using the configuration example 4 of the radio frame shown in Fig. 7.

### (Configuration example 5 of radio frame)

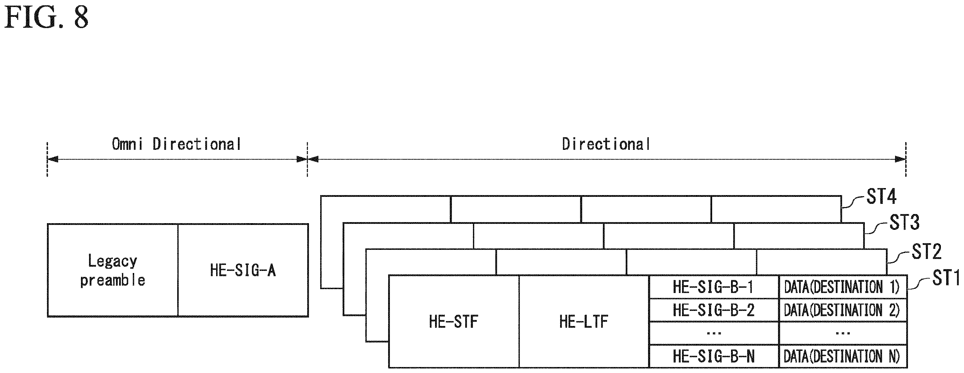

Fig. 8 is a diagram showing the configuration example 5 of the radio frame of the present embodiment. In the configuration example 5 of the radio frame shown in Fig. 8, as in the above-described configuration example 1 of the radio frame shown in Fig. 3, the data destined for the plurality of receiving devices 200 is frequency-division multiplexed in the payload part. However, in this configuration example 5, data destined for a plurality of receiving devices 200 is further multiplexed by space division multiplexing. In the present embodiment, the OFDM scheme is used for frequency division multiplexing of data in the payload part.

In the example of Fig. 8, a part subsequent to the HE-STF part of the radio frame is multiplexed into the four space-time streams ST1, ST2, ST3, and ST4. The configuration of each of the space-time streams ST1, ST2, ST3, and ST4 is similar to a configuration subsequent to the HE-STF part of the above-described configuration example 1 of the radio frame shown in Fig. 3. In Fig. 8, a legacy preamble part (a legacy preamble) is similar to that of the above-described configuration example 1 of the radio frame shown in Fig. 3. The first signal field part (HE-SIG-A) stores bandwidth information indicating a bandwidth of the entire radio frame and division information about frequency division of the second signal field part for each of the space-time streams ST1, ST2, ST3, and ST4. Also, the first signal field part (HE-SIG-A) may further store a multiaccess (MA) group identifier indicating a group to which the receiving device 200 belongs with respect to multiaccess of the wireless LAN system 1. For example, for each space-time stream, the identifier of the group of the receiving device 200 serving as a destination of data multiplexed into the space-time stream may be the MA group identifier.

The data receiving unit 201 of the transmitting device 100 wirelessly transmits the legacy preamble part (the legacy preamble) and the first signal field part (HE-SIG-A) within the radio frame shown in Fig. 8 in all directions. On the other hand, the data receiving unit 201 of the transmitting device 100 wirelessly transmits the space-time streams ST1, ST2, ST3, and ST4 in the radio frame shown in Fig. 8 in each direction.

The above is the description of the configuration example 5 of the radio frame. In the above-described example of Fig. 8, the configuration of each of the space-time streams ST1, ST2, ST3, and ST4 is similar to a configuration subsequent to the HE-STF part of the above-described configuration example 1 of the radio frame shown in Fig. 3, but may be similar to the configuration subsequent to the HE-STF unit of any one of the above-described configuration examples 2, 3, and 4 of the radio frames shown in Figs. 5, 6, and 7.

Also, in actual wireless communication in the wireless LAN system 1, signals defined in the wireless LAN system 1 such as a guard interval and a pilot signal are further added to the radio frame with respect to the above-described configuration examples 1 to 5 of the radio frame.

According to the above-described embodiment, because data destined for a plurality of receiving devices 200 can be stored in one radio frame, the utilization efficiency of the radio frame can be improved. Thereby, the effect of reducing the influence of the deterioration of the communication performance due to overheads of the radio channel inspection procedure or the transmission waiting procedure performed before the transmission of the radio frame can be obtained. The effects of the present embodiment will be described below with specific examples. In the following description of the specific example, an example using a transmission method defined in the IEEE 802.11ac wireless LAN communication standard will be described.

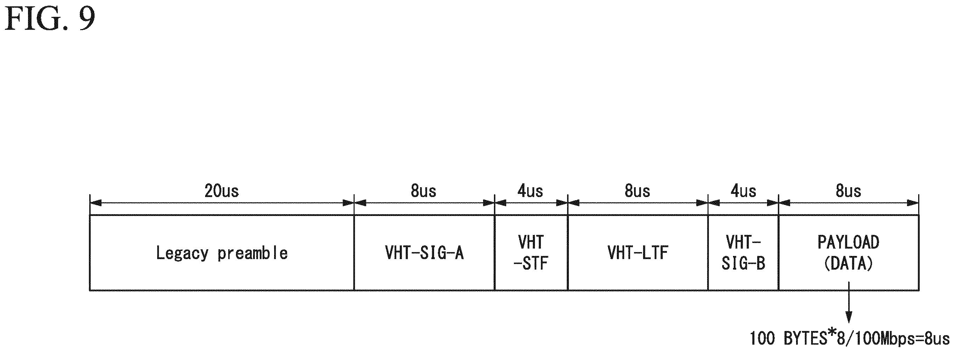

Fig. 9 is a diagram showing an example of a configuration of a conventional radio frame and an example of a time length. In the example of Fig. 9, 100-byte data is transmitted to one receiving device at a bit rate of 100 Mbps in one radio frame. In this case, as shown in Fig. 9, the time length of one radio frame is 52 microseconds (µs). It is assumed that this radio frame is used to transmit 100-byte data to each of 10 receiving devices. Here, as a standard value of the conventional technology, an inspection time required for the radio channel inspection procedure to be performed before one radio frame is transmitted is 34 microseconds and an average random waiting time in the transmission waiting procedure is 68 microseconds. Thereby, because 10 radio frames are transmitted until the transmission of data to all 10 receiving devices is completed, "(52+34+68)×10=1540" microseconds is required.

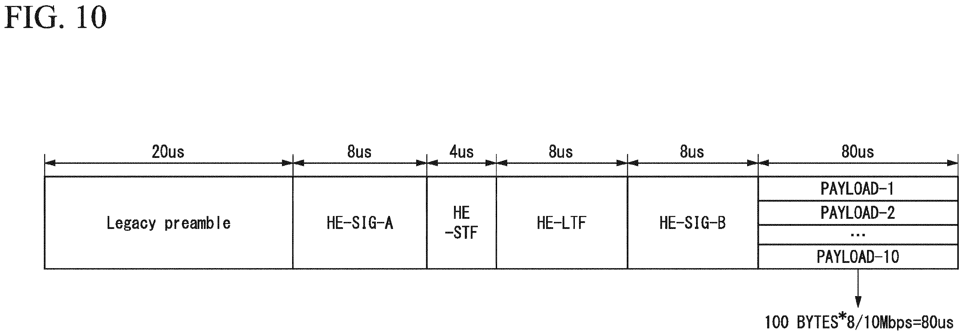

Fig. 10 is a diagram showing an example of the time length of the configuration example 1 of the radio frame of the present embodiment. In the example of Fig. 10, data destined for 10 receiving devices is multiplexed into one radio frame. Thus, it is assumed that the bit rate of data for each receiving device in the payload part is reduced to about 10 Mbps as compared with the above-described example of the radio frame configuration in Fig. 9. In this case, as shown in Fig. 10, the time length of one radio frame increases to 128 microseconds (µs) as compared with the above-described example of the radio frame configuration shown in Fig. 9. However, according to the example of the radio frame configuration of Fig. 10, because it is only necessary to transmit only one radio frame until the transmission of data to all the 10 receiving devices is completed, "128+34+68=230" microseconds is required. As described above, according to the present embodiment, the efficiency of wireless communication is improved as compared with the conventional technology. Particularly, if data of a small size is transmitted to a large number of receiving devices, the reduction in efficiency becomes conspicuous because data to be transmitted with respect to the necessary overheads is small, but the reduction in the efficiency can be suppressed according to the present embodiment.

Although embodiments of the present invention have been described above with reference to the drawings, specific configurations are not limited to the embodiments, and a design change, etc. may also be included without departing from the scope of the present invention.

For example, the present invention is applied to a wireless LAN system in the above-described embodiment, but may be applied to a wireless communication system other than the wireless LAN system.

Also, a computer program for implementing functions of the above-described transmitting device 100 or receiving device 200 may be recorded on a computer-readable recording medium and a computer system may read and execute the program recorded on the recording medium. Also, the "computer system" used here may include an operating system (OS) and hardware such as peripheral devices.

Also, the "computer-readable recording medium" refers to a non-transitory storage device including a rewritable nonvolatile memory such as a flexible disk, a magneto-optical disc, a read only memory (ROM), or a flash memory, a portable medium such as a digital versatile disk (DVD), and a hard disk embedded in the computer system.

Furthermore, the "computer-readable recording medium" is assumed to include a medium that holds a program for a constant period of time, such as a volatile memory (for example, a dynamic random access memory (DRAM)) inside a computer system serving as a server or a client when the program is transmitted via a network such as the Internet or a communication circuit such as a telephone circuit.

Also, the above-described program may be transmitted from a computer system storing the program in a storage device or the like to another computer system via a transmission medium or by transmission waves in a transmission medium. Here, the "transmission medium" for transmitting the program refers to a medium having a function of transmitting information, such as a network (communication network) like the Internet or a communication circuit (communication line) like a telephone circuit.

Also, the above-described program may be a program for implementing some of the above-described functions. Further, the above-described program may be a program capable of implementing the above-described function in combination with a program already recorded on the computer system, i.e., a so-called differential file (differential program).

### INDUSTRIAL APPLICABILITY

The present invention can be applied to a field of application in which it is necessary to improve utilization efficiency of a radio frame.

### REFERENCE SIGNS LIST

1 Wireless LAN system
10 Base station device
20 Terminal device
100 Transmitting device
101, 205 Buffer memory
102 User subcarrier mapping unit
103 Payload mapping unit
104 Header generating unit
105 Data transmitting unit
200 Receiving device
201 Data receiving unit
202 Header analyzing unit
203 Payload demapping unit
204 Data selecting unit

## Claims

1. A transmitting device comprising:
a data transmitting unit configured to wirelessly transmit a frame including a payload part in which data destined for a plurality of receiving devices is frequency-division multiplexed and a header including a signal field part storing division information about frequency division of the payload part.

2. A transmitting device comprising:
a data transmitting unit configured to wirelessly transmit a frame including a payload part in which data destined for a plurality of receiving devices is frequency-division multiplexed and a header including a first signal field part and a second signal field part subsequent to the first signal field part,
wherein the second signal field part includes a plurality of division parts into which a frequency is divided in the same bandwidth as that of the payload part, and
wherein the first signal field part stores division information about frequency division of the second signal field part and the payload part.

3. The transmitting device according to claim 2,
wherein the payload part has data destined for a plurality of receiving devices further time-division multiplexed in a band corresponding to at least one division part of the second signal field part, and
wherein the at least one division part of the second signal field part stores division information about time division of a payload part corresponding to the at least one division part.

4. A transmitting device comprising:
a data transmitting unit configured to wirelessly transmit a frame including a payload part in which data destined for a plurality of receiving devices is frequency-division multiplexed and a header including a first signal field part and a second signal field part subsequent to the first signal field part,
wherein the second signal field part includes a plurality of division parts into which a frequency is divided,
wherein the first signal field part stores division information about frequency division of the second signal field part,
wherein the payload part has data destined for a plurality of receiving devices frequency-division multiplexed in a band corresponding to at least one division part of the second signal field part, and
wherein the at least one division part of the second signal field part stores division information about frequency division of a payload part corresponding to the at least one division part.

5. A transmitting device comprising:
a data transmitting unit configured to wirelessly transmit a frame including a payload part in which data destined for a plurality of receiving devices is frequency-division multiplexed and a header including a first signal field part and a second signal field part subsequent to the first signal field part,
wherein the second signal field part includes a plurality of division parts into which a frequency is divided,
wherein the first signal field part stores division information about frequency division of the second signal field part,
wherein the payload part has data destined for a plurality of receiving devices multiplexed in a combination of frequency division multiplexing and time division multiplexing in a band corresponding to at least one division part of the second signal field part, and
wherein the at least one division part of the second signal field part stores division information about frequency division and time division of a payload part corresponding to the at least one division part.

6. The transmitting device according to any one of claims 2 to 5,
wherein the data transmitting unit wirelessly transmits the first signal field part within the frame in all directions and wirelessly transmits a plurality of space-time streams including at least the second signal field part and the payload part in each direction, and
wherein the first signal field part stores division information of the second signal field part for each space-time stream.

7. The transmitting device according to any one of claims 2 to 6, wherein the first signal field part includes a destination device identifier indicating a receiving device of a destination of data stored in a division part for each division part of the payload part.

8. A receiving device comprising:
a data receiving unit configured to receive the frame wirelessly transmitted from the transmitting device according to any one of claims 1 to 6;
a header analyzing unit configured to analyze the header of the frame received by the data receiving unit; and
a payload demapping unit configured to acquire data from the payload part of the frame received by the data receiving unit on the basis or a result of analyzing the header in the header analyzing unit.

9. A receiving device comprising:
a data receiving unit configured to receive the frame wirelessly transmitted from the transmitting device according to claim 7;
a header analyzing unit configured to analyze the header of the frame received by the data receiving unit; and
a payload demapping unit configured to acquire data from only a division part including data destined for the receiving device among division parts of the payload part of the frame received by the data receiving unit on the basis of a result of analyzing the header in the header analyzing unit.

10. A wireless communication system comprising:
a base station device including the transmitting device according to any one of claims 1 to 6; and
a terminal device including the receiving device according to claim 8.

11. A wireless communication system comprising:
a base station device including the transmitting device according to claim 7; and
a terminal device including the receiving device according to claim 9.

12. A wireless communication method comprising a step of:
wirelessly transmitting, by a transmitting device, a frame including a payload part in which data destined for a plurality of receiving devices is frequency-division multiplexed and a header including a signal field part storing division information about frequency division of the payload part.

13. A computer program for causing a computer of a transmitting device to execute a step of:
wirelessly transmitting a frame including a payload part in which data destined for a plurality of receiving devices is frequency-division multiplexed and a header including a signal field part storing division information about frequency division of the payload part.
